# EUROPEAN PATENT APPLICATION

(11) **EP 4 306 938 A1**
(43) Date of publication of application: **17.01.2024**
(21) Application number: 21929992.2
(22) Date of filing: 08.03.2021
(51) Int. Cl.: G01N 21/59, G01N 21/85

(54) **COMPONENT FOR DEPLOYING OPTICAL PROBES, AND OPTICAL PROBE**

(71) Applicant: Sensing Solutions S.L., 08193 Bellaterra Barcelona (ES)
(72) Inventor: COLLADO SEBASTIÀ, Aleix, 08197 Sant Cugat del Vallés (ES); COLLADO SEBASTIÀ, Marck, 08290 Cerdanyola del Valles (ES); OBREGÓN NÚÑEZ, Raquel, 08911 Badalona (ES)
(74) Representative: Espiell Gomez, Ignacio
(86) International application number: PCT/ES2021/070165
(87) International publication number: WO 2022/189680

(57) **Abstract**

Disclosed is a component (1) for deploying optical probes for fluid monitoring, comprising a body defined by a longitudinal dimension and having a longitudinal end provided with an interaction surface (1a) to be placed in contact with a fluid to be monitored, said body also comprising a hollow channel extending inside same and defining a measuring guide (11) suitable for transmitting optical signals between the ends thereof (11i, 11o), the interaction surface (1a) comprising a slot (13), and the measuring guide (11) comprising a path such that it intersects with the slot (13).

## Description

### Field of the invention

The object of the present invention is a component with which to deploy optical measuring probes, especially bacterial biofilm sensing probes and the monitoring of the growth thereof in fluid distribution systems. Another object of the invention is an optical probe which incorporates said component.

### Background of the invention

Optical sensors for monitoring fluids are known in the state of the art. For example, document US2013250281A1 discloses a lubricant deterioration sensor that includes an optical guide with a path from a light-emitting element to a light-receiving element, which crosses a space into which the lubricant enters. Changes in the lubricant produce changes in the light received in the light receptor, which allows knowing the state of the lubricant. For the connection of the emitter and the light receiver to be made from the outside of the container or pipe where the lubricant is located, the path of the light guide turns 180° through the integration in the sensor of two mirrors on which the light is reflected 90° before and after passing through the lubricant.

To avoid the use of mirrors, the use of lumens or curved optical fibres is known, such as those disclosed in documents EP2937537A1 and US2010027015A1. These optical sensors are cheaper to manufacture, more robust and easier to clean than those using mirrors, although it is still possible to achieve an optical sensor configuration that is even cheaper, more robust and easier to clean.

### Description of the invention

The objective of the present invention is to provide optical probes suitable for monitoring fluids that have advantages over the aforementioned state of the art. In accordance with this objective, a component has been developed intended for deploying especially advantageous optical probes for sensing biofilms and the monitoring of the growth thereof in fluid distribution systems.

This component for deploying optical probes is characterised in that it integrates all the functional elements of an optical probe in a single body obtained by means of 3D printing. Due to this, it is possible to offer optical probe configurations with better performance than those known in the state of the art.

In its most generic embodiment, the component for deploying optical probes comprises a body, defined by a longitudinal dimension, and having a longitudinal end provided with an interaction surface to be placed in contact with the fluid to be monitored. At the same time, the body comprises a hollow channel extending inside same and defining an optical measuring guide, which is suitable for transmitting optical signals between the ends thereof. This first embodiment is characterised in that the interaction surface comprises a slot and the measuring guide comprises a path such that it intersects with the slot.

Due, on the one hand, to the fact that the component integrates several of the elements of an optical probe, and on the other, to the fact that the measuring guide comprises a path such that it intersects with the slot through which the fluid to be monitored extends, this configuration results in a manner of obtaining a probe that is cheaper to manufacture, more robust and easier to clean than those known in the state of the art. The body can be obtained by means of 3D printing, so it can integrate the guide inside same, which can include curved sections, with which it can have a path that intersects with the interaction surface at some point and then be led to a connection surface.

In a preferred embodiment, the ends of the measuring guide are located in a connection surface located at the other longitudinal end of the body. Due to this, the installation of the probe in a pipe of a fluid distribution system is facilitated, since the area of interaction with the fluid is separated from the connection area of the optical guide. Preferably, the measuring guide comprises a curved section that includes said wall section that intersects with the interaction surface. And even more preferably, said curved section describes an arch of at least 180°, so that the path of the measuring guide occupies as little space as possible, thereby reducing the size of the probe.

Preferably, the bottom wall of the slot comprises a protrusion interposed in the path of the measuring guide. Due to this, it is easier for the interaction surface to accumulate the biofilm and for the optical signals that pass through the measuring guide to interact with the biofilm.

In another preferred embodiment, the body comprises a second hollow channel extending inside same and defining a reference guide, which is suitable for transmitting optical signals between the ends thereof. Due to the fact that the body is obtained by means of 3D printing, it can integrate inside both a measuring guide and a reference guide in a single body. Preferably, the reference guide comprises a path such that both ends meet on the same connection surface, thus facilitating the installation of the probe in a pipe of a fluid distribution system. Preferably, the reference guide comprises a curved section that describes an arch of at least 180°, so as to compress the size of the body. And even more preferably, the centre of the curved section extends adjacent to the measuring guide, respective longitudinal directions of both guides being perpendicular to one another at that point. In other words, the body may comprise a measuring guide also with a 180° curved section, where its centre can intersect with the interaction surface, and that the longitudinal directions of both guides at those central points are perpendicular to one another. It goes without saying that, preferably, the ends of the measuring guide and the ends of the reference guide are located on the same connection surface. In this case, the locations of their ends preferably form a parallelogram with equal sides, in order to compact the size of the component as much as possible.

So that the component can easily receive the connection of optical cables that transmit thereto and receive the optical signals, the ends of the measuring guide and/or the reference guide comprise optical connection means, such as threaded or screw or snap type connectors. In a preferred embodiment, the optical connection means are formed by protrusions with a conical inside, in which it is easy to fix the optical signal transmission cables by means of resin.

In an optional version of the component, the body is solid and only the hollow channels are empty. In another alternative version, the body only comprises walls that define the hollow elements, such as guides or channels, while the rest of the volume of the body is hollow. The walls defining the guides or channels preferably have a thickness between 0.5 mm and 20 mm. In this second version, the connection surface may comprise a hole through which to fill the body, such as with resin. Preferably it also has a second hole to expel the air from the inside while being refilled.

To facilitate its attachment to the piping of the fluid system to be inspected, the component preferably comprises a threaded external surface in at least a section of its longitudinal dimension.

Optionally, the body comprises a hollow channel that longitudinally crosses the body from the connection surface to the interaction surface, and that defines a cavity suitable for housing a temperature sensor, which allows a better calibration of the optical probe, among other advantages.

Finally, the component can optionally comprise a position indicator, located on the connection surface and parallel to the slot. In this way, when screwing the component into the pipe, it is possible to know the position of the slot through which the fluid to be monitored must extend.

Another object of the present invention is to claim an optical probe that includes the component according to any of the embodiments described above, optical probe being understood as said component in conjunction with at least the optical cables that transmit thereto and receive the optical signals passing through the component. Said cables can be connected at their other ends to an optical signal emitter and/or sensor.

### Brief description of the figures

In order to better understand what has been set forth, a number of drawings are attached wherein a practical embodiment is schematically depicted merely by way of non-limiting example.
Figure 1 is a perspective view of a preferred embodiment of the present component for deploying optical probes.
Figure 2 is a cross-sectional view of the preferred embodiment of Figure 1.

### Description of a preferred embodiment

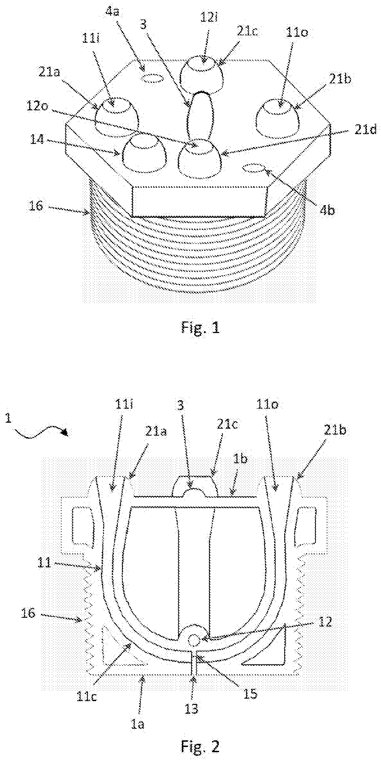

Next, a preferred embodiment of the present component for deploying optical probes is described, referring to figures 1 and 2.

Figure 1 shows a perspective view of a preferred embodiment of component (1), where the vertically arranged longitudinal dimension of the body can be seen. This embodiment has a connection surface (1b) at the upper end, wherein the ends (11i, 11o, 12i, 12o) of the guides (11, 12) are located.

Figure 2 shows an axial section of the component (1), where the hollow channel that defines the measuring guide (11) can be seen, cross sectioned along the entire length thereof. The inside of component (1) only comprises the walls that define the hollow elements, such as the measuring guide (11), the reference guide (12) and the cavity (14) for the temperature sensor, while the rest of the volume of the body is hollow. Since a large part of the body is empty, figure 2 also shows a section of the reference guide (12), as well as the cross section that is perpendicular to the measuring guide (11). At the lower end is the interaction surface (1a) to be placed in contact with the fluid to be monitored. As can be seen, the interaction surface (1a) comprises a slot (13) and the measuring guide (11) comprises a path such that it intersects with the slot (13) in its curved section (11c), which describes an arch of more than 180°. The bottom wall of the slot (13) comprises a protrusion (15) placed in the path of the measuring guide (11).

For its part, the reference guide (12) comprises a path such that both ends (12i, 12o) of the reference guide (12) are on the same connection surface (1b) as those of the measuring guide (11), forming between the four a parallelogram with equal sides. In this embodiment, the reference guide (12) comprises a curved section (12c) that describes an arch of more than 180°, the centre of which extends above the measuring guide (11), respective longitudinal directions being perpendicular at that point.

This preferred embodiment of the component (1) comprises integrated optical connection means (21a, 21b, 21c, 21d) formed by protrusionns with a conical inside, linked to the ends (11i, 11o, 12i, 12o) of the measuring guide (11) and the reference guide (12). Additionally, the component (1) comprises an integrated threaded external surface (16) in a section of its longitudinal dimension.

This preferred embodiment comprises a position indicator (3), located on the connection surface (1b) and parallel to the slot (13). In turn, the connection surface (1b) comprises two holes (4a, 4b) through which to fill the body.

## Claims

1. A component (1) for deploying optical probes for fluid monitoring, comprising a body defined by a longitudinal dimension and having a longitudinal end provided with an interaction surface (1a) to be placed in contact with a fluid to be monitored, said body also comprising a hollow channel extending inside same and defining a measuring guide (11) suitable for transmitting optical signals between the ends thereof (11i, 11o), the component (1) being **characterised in that** the interaction surface (1a) comprises a slot (13), and the measuring guide (11) comprises a path such that it intersects with the slot (13).

2. The component (1) for deploying optical probes according to claim 1, wherein both ends (11i, 11o) of the measuring guide (11) are located on a connection surface (1b) located at the other longitudinal end.

3. The component (1) for deploying optical probes according to claim 2, wherein the measuring guide (11) comprises a curved section (11c), the central section of which intersects with the slot (13).

4. The component (1) for deploying optical probes according to claim 3, wherein the curved section (11c) describes an arch of at least 180°.

5. The component (1) for deploying optical probes according to any of the preceding claims, wherein the bottom wall of the slot (13) comprises a protrusion (15) interposed in the path of the measuring guide (11).

6. The component (1) for deploying optical probes according to any of the preceding claims, **characterised in that** it comprises a second hollow channel extending inside same and defining a reference guide (12) suitable for transmitting optical signals between the ends thereof (12i, 12o).

7. The component (1) for deploying optical probes according to claim 6, wherein the reference guide (12) comprises a path such that both ends (12i, 12o) of the reference guide (12) are on the same connection surface (1b).

8. The component (1) for deploying optical probes according to claim 7, wherein the reference guide (12) comprises a curved section (12c) that describes an arch of at least 180°.

9. The component (1) for deploying optical probes according to any of claims 6 to 8, wherein the centre of the curved section (12c) is adjacent to the centre of the measuring guide (11), the longitudinal directions in said centres being perpendicular.

10. The component (1) for deploying optical probes according to any of claims 6 to 9, wherein the ends (11i, 11o) of the measuring guide (11) and the ends (12i, 12o) of the reference guide (12) are located on the same connection surface (1b).

11. The component (1) for deploying optical probes according to claim 10, wherein the locations of said ends (11i, 11o, 12i, 12o) form a parallelogram with equal sides.

12. The component (1) for deploying optical probes according to any of the preceding claims, wherein the ends (11i, 11o) of the measuring guide (11) and/or the ends (12i, 12o) of the reference guide (12) comprise optical connection means for connecting (21a, 21b, 21c, 21d) with the outside of the component (1).

13. The component (1) for deploying optical probes according to any of the preceding claims, **characterised in that** it comprises a threaded external surface (16) in at least one section of the longitudinal dimension thereof.

14. The component (1) for deploying optical probes according to any of the preceding claims, **characterised in that** it comprises a hollow channel that longitudinally crosses the body from the connection surface (1b) to the interaction surface (1a) and which defines a cavity (14) for a temperature sensor.

15. The component (1) for deploying optical probes according to any of the preceding claims, **characterised in that** it comprises a position indicator (3), located on the connection surface (1b) and parallel to the slot (13).

16. The component (1) for deploying optical probes according to any of the preceding claims, **characterised in that** the body comprises walls that define the hollow elements and the rest of the volume of the body is hollow.

17. An optical probe suitable for monitoring liquid media, **characterised in that** it comprises a component (1) for deploying optical probes as described in any of the preceding claims.
